# EUROPEAN PATENT SPECIFICATION

(11) **EP 4 223 388 B1**
(45) Date of publication and mention of the grant of the patent: **07.08.2024**
(21) Application number: 23154633.4
(22) Date of filing: 02.02.2023
(51) Int. Cl.: B01D 46/04, B01D 46/24, B01D 46/58, B01D 46/76

(54) **AN APPARATUS COMPRISING A FILTERING DEVICE AND RELATIVE CLEANING SYSTEM**
VORRICHTUNG MIT EINER FILTERVORRICHTUNG UND ZUGEHÖRIGES REINIGUNGSSYSTEM.
APPAREIL COMPRENANT UN DISPOSITIF DE FILTRATION ET SYSTÈME DE NETTOYAGE ASSOCIÉ.

(30) Priority: 04.02.2022 IT 202200002027
(43) Date of publication of application: 09.08.2023
(73) Proprietor: Wamgroup S.p.A., 41124 Modena (IT)
(72) Inventor: MARCHESINI, Vainer, 41030 SAN PROSPERO (MODENA) (IT); GUERNIERI, Christian, 46036 BORGO MANTOVANO (MANTOVA) (IT)
(74) Representative: Colò, Chiara

(56) References cited:
- WO-A1-2020/144595
- WO-A1-82/02675
- GB-A- 1 229 952

## Description

This invention relates to an apparatus comprising a filtering device, for example which can be used in a dust collector, and a cleaning system for cleaning the filtering device.

The cleaning system is designed to be associated with the filtering device and selectively activated when it is necessary to clean the filtering device, so as to remove, by a mechanical percussion action, the dust which has been deposited on filtering surfaces of the filtering device.

Dust collectors are industrial machines which treat gaseous fluids, normally air contaminated by industrial transformation processes. The air treated by the dust collectors contains a significant quantity of dust, which is much greater than the quantity of dust normally present in ambient air. The function of these machines is to treat the polluted industrial air to make it compatible with discharge into the atmosphere and/or within the surrounding work environments.

Specifically, but not exclusively, the dust collectors can be used to remove dust from gaseous fluids consisting of air containing dust which is generated in the loading of silos or in transformation, movement, cutting or other industrial processes, performed, for example, by mixing devices, conveyors, packaging machines, dosing machines, thermal or mechanical cutting machines and/or the like. These gaseous fluids cannot be discharged into the atmosphere or reused without prior removal of the dust contained therein.

The prior art dust collectors comprise a plurality of filtering devices, which can be cleaned also using mechanical cleaning systems.

In industrial application, the dust collectors are configured for filtering fine dusts having a grain size variable, approximately, between 1 micron and 200 microns. These apparatuses are configured for filtering air flows having high concentrations of dust, of between 0.5 g/m³ and 500 g/m³.

The dust collectors may comprise filtering devices which use a plurality of tubular filtering elements made of a filter material, the tubular elements having cross sections of different shapes (circular, oval, polygonal or others). More generally speaking, the filtering devices comprise a plurality of filtering channels, defined, for example, but not necessarily, inside the filtering elements, alternated with evacuation channels for evacuating the fluid from which the dust has been removed.

The filtering elements have an open end and a closed end.

The dust follows an S-shaped path, since it enters a filtering channel, is intercepted by the filter material and exits from the evacuation channel.

The dust, present in high concentrations in the air to be filtered, is intercepted by the filter material and tends to clog the filtering channels, thereby progressively reducing the efficiency thereof. For this reason, the filtering devices are combined with a periodic cleaning system which detaches the dust particles from the filter material and restores the initial filtering efficiency.

The filter material may be of various types, for example fabric or cellulose, and may have a smooth or pleated configuration. The pleats increase the nominal filtering surface but have the limit of being clogged quickly in the cusps, thereby limiting the effectiveness of the filtering element. In effect, the sharp edges of the pleated elements are critical points of adhesion of the dust which gradually reduce the active filtering surface.

In order to improve dust collectors, it is therefore important to search for geometries of the filtering element which optimise the effectiveness, but also, if not more so, act on the cleaning system, so that the latter operates quickly, efficiently and with a low energy consumption in order to restore the functional efficiency of the filtering element.

Cleaning systems are known which comprise a percussion element for generating vibrations in the filtering device, by applying to the latter a series of controlled percussions, in order to detach the dust from filtering surfaces of one or more filtering elements included in the filtering device.

International patent application WO 2020/144595 discloses a cleaning system comprising a percussion element which is raised and lowered cyclically to cause shock waves on a head of the filtering device. The percussion element acts on a distributor frame positioned in contact with the head of the filtering device to distribute on the head the vibrations generated by the percussion element.

The prior art cleaning system comprises an insulator element which can be moved between an open position and a closed position. In the open position, the insulator element allows a flow of clean air coming from the filtering device to flow towards the outside environment. In the closed position, the air coming from the filtering device is prevented from flowing towards the outside environment.

The insulator element is hinged to a frame arranged in a fixed position relative to the filtering device. In order to pass from the open position to the closed position, or vice versa, the insulator element rotates about a hinge axis arranged along one side of the frame.

The cleaning system disclosed in WO 2020/144595 comprises a cam which can be rotated to move the insulator element to its closed position, when the filtering device is to be cleaned. The cam has a contact element which, during rotation, actuates the percussion element for a desired number of times.

An electromagnetic device is also provided, which can be activated to keep the insulator element in the closed position during the cleaning operations. When the filtering device has been cleaned, the electromagnetic device is deactivated to allow the insulator element to return to the open position.

A drawback of the cleaning system described above derives from the fact that the distributor frame has a non-optimised configuration. In particular, the distributor frame has non-optimal performance with regard to the distribution of shock waves caused by the percussion element. At the same time, the mechanical stresses applied by the percussion element condition the effectiveness and the duration of operation over time of the distributor frame. More specifically, these stresses are concentrated in a central region of the distributor frame and may result in breakages in the central region and/or a deformation of the head of the respective filtering device, as well as adversely affecting the efficiency of the cleaning action in peripheral regions of the filtering device.

A further drawback of the prior art cleaning system is that, in the open position, the flow of clean air coming from the filtering device has to follow a rather tortuous path to be brought outside the cleaning system. The flow of clean air leaves the filtering device mainly passing from the zone in which the insulator element is furthest from the frame, that is to say, from the side of the frame opposite to that along which the hinge axis is defined and following a trajectory which is almost entirely arranged transversely with respect to a longitudinal axis of the filtering element. In this way, the insulator element creates a turbulence along the path of the air from which dust has been removed, which reduces the efficiency of a suction apparatus arranged for sucking the air coming from the filtering device. This also results in non-homogeneous conditions for the escape of the flow of clean air, since the air coming from the regions of the filtering device closest to the hinge axis has to follow a path which is longer and curved with respect to the air coming from the regions of the filtering device furthest from the hinge axis.

Another drawback of the prior art cleaning system is linked to its lack of flexibility in the choice of the moment in which the insulator element is moved to the closed position. Since the cam which actuates the percussion element also has the function of moving the insulator element to the closed position, the insulator element is always moved to the closed position when the percussion element applies the first percussion to the distributor frame.

An object of the invention is to improve the prior art apparatuses, particularly the apparatuses comprising a cleaning system intended to clean a filtering device by means of a mechanical percussion action.

A further object is to provide a cleaning system for cleaning a filtering device, in which the risks of breakage of the components of the cleaning system are reduced.

Another object is to provide a cleaning system for cleaning a filtering device which has a good cleaning effectiveness both in a central region and above all in a peripheral zone of the filtering device.

Another object is to provide a cleaning system which is able to clean a filtering device comprising a plurality of filtering elements having a large filtering surface defined by multiple filtering channels. In particular, it is desirable that the cleaning system is able to effectively clean a plurality of filtering elements which define filtering channels that can be very close to one another, so as to increase the active filtration surface under equal overall dimensions of the filtering device, or to reduce the overall size of the filtering device with the same active filtering surface.

Another object is to provide an apparatus comprising a cleaning system for cleaning a filtering device comprising a plurality of filtering elements in which the energy consumption necessary for cleaning the filtering elements is reduced.

A further object is to provide an apparatus comprising a cleaning system which is able to uniformly clean a filtering device comprising a plurality of filtering elements, in such a way that the filtering device can maintain a filtration efficiency which is constant over time and in each filtering element.

A further object is to provide an apparatus comprising a cleaning system provided with a percussion element in which it is possible to effectively use the percussions generated by the percussion element and distribute the energy deriving from these percussions to a plurality of filtering elements included in the filtering device.

It is furthermore desired to optimise the mechanical structure of the cleaning system, in such a way as to reduce the friction which is generated during movement of the percussion element and consequently reduce the energy consumption by a motor which drives the percussion element. Another object is to provide an apparatus comprising a cleaning system for cleaning a filtering device in which the path of the flow of clean air coming from the filtering device and passing through the cleaning system, is improved.

Yet another object is to provide an apparatus comprising a cleaning system for cleaning a filtering device which has an increased flexibility with respect to the prior art cleaning systems, particularly when selecting the moment in which the cleaning action is started or finished.

According to the invention, there is provided an apparatus comprising a filtering device which includes a plurality of filtering elements made of a filter material, the apparatus further comprising a cleaning system for periodically cleaning the filtering device in order to remove contaminating particles from the filtering device, the cleaning system having at least one percussion element for applying percussions at least on an impact surface of an intermediate structure, so as to generate, for each percussion, an impact which is able to detach from the filter material a first fraction of the contaminating particles adhering to it and then vibrate the filter material to detach from it further contaminating particles, the intermediate structure being interposed between the percussion element and the filter material, the intermediate structure having an inner region delimited at least partly by the impact surface and an outer region which surrounds at least partly the inner region, wherein the intermediate structure has a capacity to absorb energy deriving from the percussions which is greater in the inner region than in the outer region.

During the percussion, the percussion element strikes the intermediate structure and an impact of the percussion element is generated against the impact surface of the intermediate structure. As a result of this impact, the percussion element transfers kinetic energy to the intermediate structure. The latter in turn transfers energy to the filter material and causes a significant fraction of the contaminating particles adherent to the filter material to be detached from the filter material. Moreover, the filter material is vibrated in order to detach the remaining contaminants from it and prevent the particles from adhering again to the filter material. The contaminating particles were present in the gaseous fluid from which the filtering device allows dust to be removed.

In other words, the percussion applied by the percussion element produces a vibration or sharp blow on the filter material which detaches from the filter material most of the contaminating particles adhering to it. Subsequently, the energy transferred from the percussion element to the intermediate structure vibrates the filter material, so as to prevent the contaminating particles which have already been detached from the filter material from adhering again to the latter, and so as to detach the contaminating particles still adhering to the filter material, in such a way as to make their removal subsequently possible.

In this way, the cleaning system is able to clean the filtering device in an optimum manner, even if the filtering device comprises a large number of filtering elements which are very close to each other.

Owing to the greater capacity to absorb energy, the inner region of the intermediate structure absorbs a greater quantity of kinetic energy than the outer region. In this way, the inner region dampens the effects of the impact more than the outer region. Consequently, it is possible to reduce the stresses transmitted by the percussion element to the intermediate structure in the inner region and distribute them towards the outer region. Reducing the stresses transmitted by the percussion element to the inner region of the intermediate structure reduces the risks of breakages in the intermediate structure, even if the percussion element applies several hundreds of percussions to the intermediate structure per day and tens of thousands of percussions per year.

In an embodiment, the capacity to absorb the energy deriving from the percussions decreases progressively from a central part of the inner region towards the periphery of the inner region.

Optionally, the capacity to absorb the energy deriving from the percussions may be substantially constant in the central part of the inner region and decrease progressively outside the central part of the inner region.

In an alternative embodiment, the capacity to absorb the energy deriving from the percussions may be substantially constant in the entire inner region and have a lower value in the outer region.

In an embodiment, the intermediate structure comprises a head which supports the filtering elements and a distributor frame facing the percussion element for distributing on the head the energy deriving from the percussions.

In an embodiment, the distributor frame and the head are spaced apart from each other in the inner region and are in contact with each other in the outer region.

This is made possible owing to a recess formed on the distributor frame in the inner region, or alternatively owing to a recess made on the head in the inner region.

In this way, in the inner region, between the head and the distributor frame, in use, a gap is defined which makes possible an effective and homogeneous propagation of the vibrations in the distributor frame, and in particular towards the respective outer region, in which the distributor frame is operatively in contact with the head.

This makes it possible to transmit more effectively the impact and consequent active vibrations to the portions of the filter material furthest away from the percussion element, that is to say, supported by a peripheral region of the head.

The effectiveness of cleaning the filter material by the cleaning system is thus improved and made more homogeneous.

In an embodiment, the head has a lower density in the inner region than in the outer region. This may occur, for example, because the inner region of the head has been made lighter than the outer region, or because a material with non-uniform properties between the inner region and the outer region has been selected for the head.

Due to the lower density, the energy absorption in the inner region is greater than in the outer region.

The head with a lower density in the inner region may also be used without the distributor frame. In this embodiment, the intermediate structure comprises only the head.

This embodiment is particularly easy to construct owing to the reduced number of components.

In an embodiment, the cleaning system may optionally comprise an insulator element movable between a closed position, in which the insulator element blocks a gaseous flow coming from the filtering device, and an open position, in which the insulator element allows passage of the gaseous flow.

The insulator element blocks the gaseous flow, that is to say, the flow of clean air coming out of the filtering device during the cleaning operations, so that these operations are not disturbed by the flow of clean air.

In an embodiment, the insulator element is movable between the closed position and the open position owing to a movement of the insulator element on a plane.

The plane on which the insulator element is movable may be arranged transversally, in particular substantially perpendicularly, to a longitudinal axis of each filtering element.

In this way, in the open position, the flow of clean air can flow from the filtering device towards the outside environment, passing through the insulator element, along a direct and non-tortuous path, with uniform conditions almost throughout the entire filtering device.

In an embodiment, the insulator element can be driven between the open position and the closed position independently of the percussion element. This makes it possible to increase the flexibility of the cleaning apparatus, since a user can decide, depending on the operating conditions and the type of fluid treated by the filtering device, to actuate the percussion element after a predetermined time has elapsed from the closing of the insulator element, and/or to move the insulator element to the open position after the percussion element has been deactivated for a predetermined time.

The invention can be better understood and implemented with reference to the accompanying drawings which illustrate non-limiting example versions of it and in which:
Figure 1 is a perspective view showing an apparatus comprising a cleaning system connected to a filtering device;
Figure 2 is a view from above of the apparatus of Figure 1;
Figure 3 is a cross-section along the plane III-III of Figure 2;
Figure 4 is an exploded perspective view of the apparatus of Figure 1;
Figure 5 is an exploded side view of the apparatus of Figure 1;
Figure 6 is a schematic side view, with some parts in cross section, showing an apparatus according to an alternative embodiment;
Figure 7 is a view like that of Figure 6, showing an apparatus according to another alternative embodiment;
Figure 8 is a view like that of Figure 6, showing an apparatus according to a further alternative embodiment.

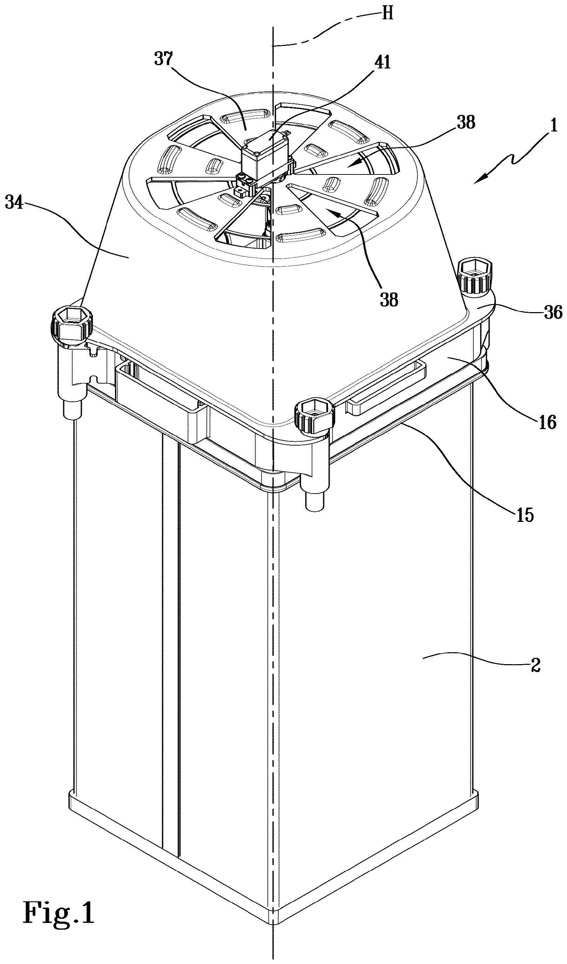

Figure 1 shows an apparatus comprising a cleaning system 1 which is coupled to a filtering device 2, in order to clean the filtering device 2. In the example shown, the cleaning system 1 is positioned above the filtering device 2.

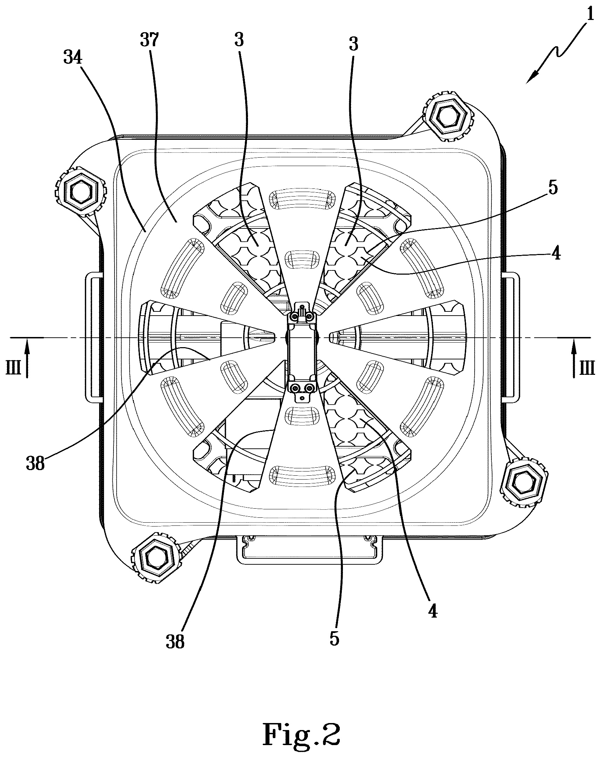

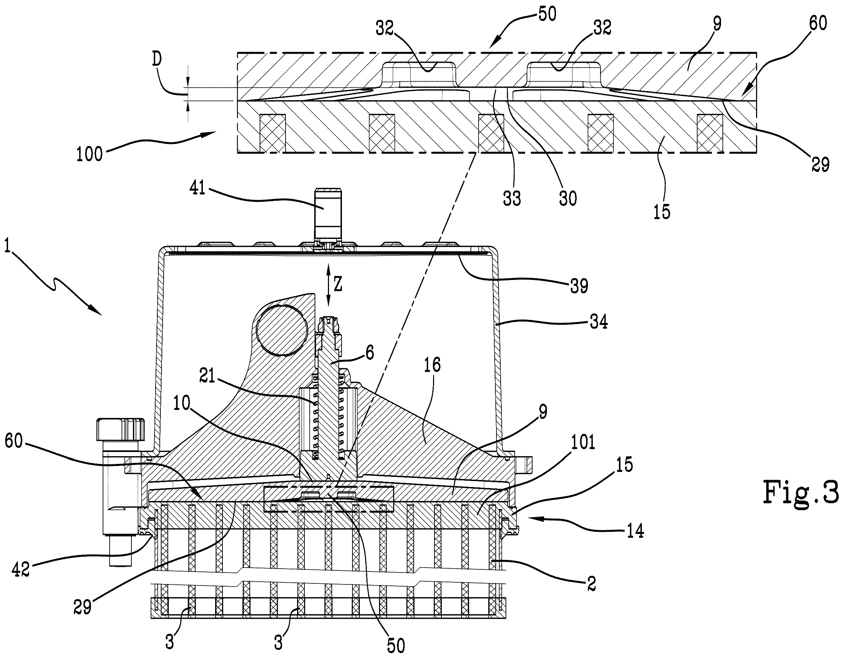

The filtering device 2 may be included in a dust collector suitable for removing dust from a gaseous fluid, for example of the type disclosed in international patent application WO 2018/116268. As shown in Figures 2 and 3, the filtering device 2 comprises a plurality of filtering elements 3 having respective transversal cross sections which may be closed geometrical shapes, for example circular, elliptical, oval or other. Alternatively, the filtering elements 3 may be shaped like channels, for example having an elongate geometry, in a transversal cross section of the filtering device 2.

The filtering device 2 extends along a longitudinal axis H which may be parallel to respective axes of the filtering elements 3. During operation, the longitudinal axis H may be positioned vertically. This arrangement of the longitudinal axis H is possible, for example, if the dirty gaseous fluid enters from one end of the filtering device 2 and the clean gaseous fluid leaves from the opposite end of the filtering device 2.

However, the longitudinal axis H may also be positioned not vertically, for example horizontally or in an oblique direction relative to the horizontal direction, particularly if the dirty gaseous fluid has an inlet direction arranged transversely to the outlet direction of the clean gaseous fluid, that is to say, if - for example - the dirty gaseous fluid enters the filtering device 2 from a respective lateral surface and the clean gaseous fluid exits from an end of the filtering device 2.

The filtering elements 3 may be made of a filter material which may be, for example, a semi-rigid material, such as non-woven fabric or cellulose. The filtering elements 3 of the filtering device 2 may be kept in contact along a direction parallel to their length in such a way as to enclose therebetween corresponding flow channels 4 for the gaseous fluid.

Inside each filtering element 3 a flow duct is defined, delimited by a filtering surface 5, that is to say, by a surface of the filtering element which may extend parallel to the longitudinal axis H.

Each filtering element 3 has an open end through which a gaseous fluid from which dust is to be removed can enter.

During operation, the fluid from which dust is to be removed may enter the filtering elements 3 through the respective open ends and may leave the filtering elements 3 through the filtering surface 5, after the contaminating particles, for example dust, have been retained on the inner surface of the filtering elements 3. Through the filtering surface 5, the fluid from which dust has been removed flows into the flow channels 4 through which the fluid from which dust has been removed is discharged.

It is also possible to provide an opposite path for the gaseous fluid to be removed, that is to say, a path according to which the fluid enters into the flow channels 4 through respective open end sections, penetrates into the filtering elements 3 by passing through the respective filtering surface 5, and then leaves the filtering device 2 through the open ends of the filtering elements 3. In this case, the dust settles on the outer surface of the filtering elements 3.

The filtering device 2 may also have a structure different from that described in international patent application WO 2018/116268.

For example, according to an alternative embodiment, the filtering device 2 may comprise a single flow channel for the dirty gaseous fluid, inside of which a plurality of filtering elements 3 is arranged. The clean gaseous fluid can pass inside the filtering elements 3.

According to a further alternative embodiment, the filtering device 2 may comprise a plurality of rows of filter material, wherein between two adjacent rows of filter material a channel for the dirty gaseous fluid is defined or alternatively a channel for the clean gaseous fluid is defined. In this way, in a transversal cross-section of the filtering device 2, elongate channels for the clean gaseous fluid alternate with elongate channels for the dirty gaseous fluid.

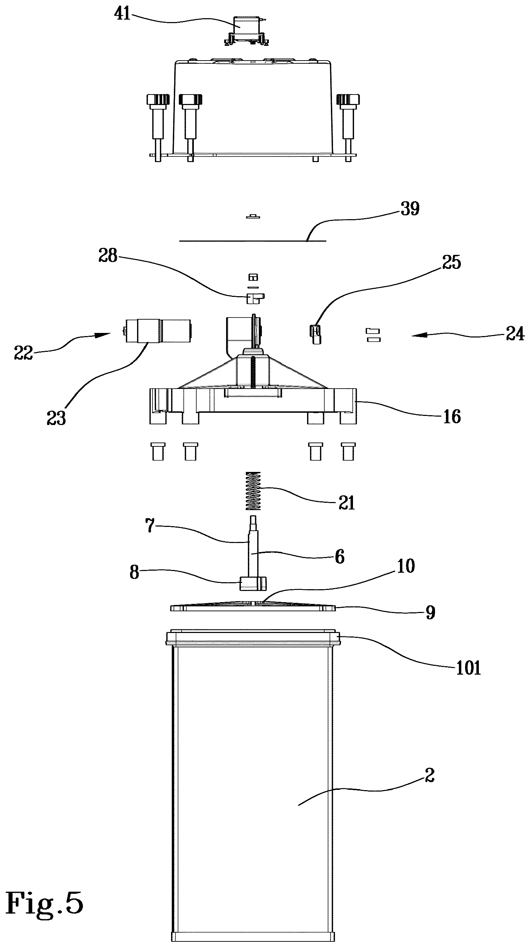

The cleaning system 1 is configured for periodically cleaning the filtering device 2 by a mechanical action, more specifically by a percussion action which generates an impact and consequent vibrations, having the aim of detaching from the filtering surface 5 the contaminating particles, for example the dust particles, which have remained attached to that surface. The cleaning system 1 comprises a percussion element 6, movable along a movement direction Z which may be parallel to the longitudinal axis H. According to the example shown, the movement direction Z is vertical. As shown in Figure 5, the percussion element 6 may comprise a stem 7 at an end of which a mass 8 is provided. The mass 8 may be, for example, located at the lower end of the stem 7.

An intermediate structure 100 is interposed between the percussion element 6 and the filtering device 2. The percussion element 6 is configured for applying successive percussions to the intermediate structure 100, thereby transferring to the intermediate structure 100 kinetic energy which the intermediate structure 100 transmits in turn to the filtering device 2, more specifically to the filter material which forms the filtering elements 3. The filter material is thus made to vibrate to detach the contaminating particles which have remained attached to the filter material.

The intermediate structure 100 may comprise a distributor frame 9. The percussion element 6 is configured to interact with the distributor frame 9 for applying on the distributor frame 9 a plurality of percussions. Each percussion generates an impact and consequent vibrations in the distributor frame 9. The distributor frame 9 may be positioned below the percussion element 6. Therefore, in an operating configuration, the distributor frame 9 is interposed between the percussion element 6 and the filtering device 2.

The intermediate structure 100 may further comprise a head 101 included in the filtering device 2. The head 101 is in particular positioned at one end of the filtering device 2 and can support the filtering elements 3.

The head 101 is operatively interposed between the distributor frame 9 and the filter material.

The distributor frame 9 extends mainly on a plane perpendicular to the movement direction Z, that is to say, on a horizontal plane. The distributor frame 9 has a plurality of openings through which the flow of clean air coming from the filtering device 2 can pass. The distributor frame 9 has an impact surface 10 on which the percussions of the percussion element 6 are applied. According to the example shown, the impact surface 10 is an upper surface of the distributor frame 9. The latter also has an inner region 50, delimited at least partly by the impact surface 10. The inner region 50 is adjacent to the impact surface 10. According to the example shown, the inner region 50 is positioned below the impact surface 10, but this condition is not necessary as it depends on the mutual arrangement of the cleaning system 1 and the filtering device 2, as well as on the orientation of the longitudinal axis H. The inner region 50 may have, in plan view, an area greater than the impact surface 10.

According to the example shown, the inner region 50 is a central region, that is, arranged approximately at the centre of the distributor frame 9, but this condition is not necessary.

The distributor frame 9 comprises a plurality of ribs 11 arranged around the impact surface 10, which may, for example, be directed radially relative to the impact surface 10. The ribs 11 may be arranged at respective constant angular distances. According to the example shown, eight ribs 11 are provided, the ribs 11 being arranged at an angular distance of 45° from each other. The ribs 11 may be substantially rectilinear. The ribs 11 are joined to each other, at respective outer ends, by a perimeter structure or connecting structure 12. The connecting structure 12 has a geometrical shape corresponding to the shape of the filtering device 2 below. In particular, the connecting structure 12 may have a rectangular or square shape, but this condition is not necessary.

A further connecting structure 13 may be provided inside the connecting structure 12, for joining to one another respective intermediate regions of the ribs 11.

According to an alternative embodiment, several further connecting structures 13 may be provided inside the connecting structure 12, arranged one inside the other.

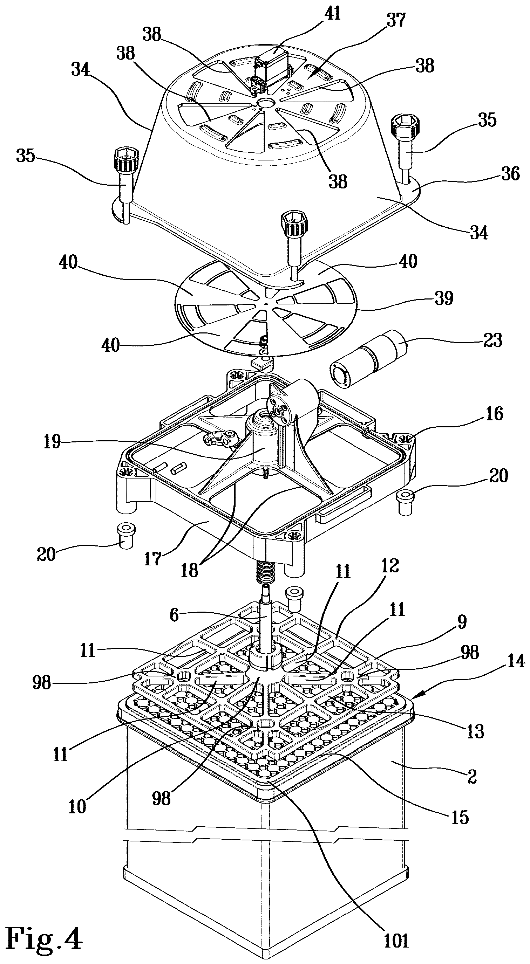

The ribs 11 are joined to the further connecting structure 13 at one or more nodes 98, as shown in Figure 4. The ribs 11 and the further connecting structure 13 define a branched structure which covers the filtering element in a capillary manner. The nodes 98 actively participate in the homogeneous distribution of the energy deriving from the impact.

The distributor frame 9 is configured to rest, during use, on an end 14 of the filtering device 2, in particular on the upper end of the filtering device 2. More specifically, the distributor frame 9 may be rested on a perimeter edge 15 of the filtering device 2. The perimeter edge 15 may delimit the head 101.

It has been found experimentally that the geometry of the distributor frame 9 described above allows the impact and the consequent vibrations generated by the percussion element 6 to be distributed uniformly on the end 14 of the filtering device 2, in such a way that almost the entire filtering surface 5 receives the impact propagated and the relative vibrations.

It is, however, also possible to use geometries of the distributor frame 9 different from the one described above.

The distributor frame 9 is intended to be interposed between the percussion element 6 and the head 101, in such a way that the percussion element 6 periodically strikes the distributor frame 9 and the latter transmits the impact and the vibrations thus generated directly to the filtering device 2.

According to an alternative embodiment not illustrated, one or more intermediate elements may be interposed between the percussion element 6 and the distributor frame 9. Similarly, one or more intermediate components may be interposed between the distributor frame 9 and the end 14.

The cleaning system 1 further comprises a supporting structure 16 for supporting the percussion element 6.

According to the example shown, the supporting structure 16 comprises an outer frame 17 from which a plurality of arms 18 extend. The arms 18 join each other at a central support 19, inside of which the percussion element 6 may be housed.

The outer frame 17 rests on an outer surface of the filtering device 2 and has a twofold function, that is to say, it serves for locking the filtering device 2 and containing the distributor frame 9.

The supporting structure 16 is fixed to a plate, not illustrated, which separates a clean zone of the filtering device 2 from a dirty zone. In the clean zone there is a gaseous fluid from which the dust has already been removed, whilst in the dirty zone there is a gaseous fluid which has not yet been filtered. The supporting structure 16 is fixed to the above-mentioned plate by a plurality of fixing elements 20 which also perform a shock absorbing and anti-vibration function.

The percussion element 6 is slidably housed inside the central support 19, so as to be movable forwards and backwards parallel to the movement direction Z.

An elastic element 21, for example a helical spring, may be interposed between the percussion element 6 and the central support 19. The elastic element 21 may be mounted in such a way as to push the percussion element 6 towards the filtering device 2. The purpose of the elastic element 21 is also to absorb part of the impact due to the return of the percussion element 6. Owing to the elastic element 21, when the percussion element 6 returns backwards after striking the intermediate structure 100, it is possible to transmit to the supporting structure 16 a reduced energy with respect to that which would be transmitted to the supporting structure 16 if the elastic element 21 were not present. The elastic element 21 has a damping effect against the vibrations generated during the return stroke of the percussion element 6.

It is possible to use an elastic element 21 shaped in a different manner from a helical spring, for example shaped like a polyurethane block.

A damping function similar to that of the elastic element 21 is performed by the fixing elements 20.

A seal 42, shown in Figure 3, also cooperates in damping the vibrations generated during the return stroke of the percussion element 6. The seal 42 acts as a sealing element to isolate the clean zone of the filtering device 2 from the dirty zone.

The cleaning system 1 further comprises a drive device 22 for moving the percussion element 6 along the movement direction Z. The drive device 22 may comprise a motor 23, for example an electric motor, and a transmission device 24, for transmitting movement from the motor 23 to the percussion element 6 while transforming the rotary movement of a shaft of the motor 23 into a linear movement of the percussion element 6. The transmission device 24 may comprise a lever 25 having a first end rotatably connected to a shaft of the motor 23 and a second end suitable for interacting periodically with a movement member 28 fixed relative to the percussion element 6. The lever 25, rotated by the motor 23, periodically interacts with the movement member 28, thereby moving the latter upwards together with the percussion element 6. Subsequently, the lever 25, while continuing to rotate, disengages from the movement member 28 and the percussion element 6, which is no longer held, moves downwards due to the force of gravity, in the movement direction Z.

The percussion element 6 may at this stage be assisted by the elastic element 21, which pushes the percussion element 6 towards the distributor frame 9 as soon as the lever 25 disengages from the movement member 28.

In this way, the percussion element 6 strikes the distributor frame 9, thereby generating an impact which in turn generates vibrations which propagate throughout the distributor frame 9 and are transmitted by the latter to the filtering device 2. In more detail, the impact and the vibrations generated by the percussion element 6 are transmitted by the distributor frame 9 to the head 101 of the filtering device 2 and, consequently, to the filter material located below the head 101.

For each revolution of the motor 231, a forward and backward stroke of the percussion element 6 is generated, since at each rotation of the motor 23 the lever 25 lifts the percussion element 6 and then lets it fall, thereby generating an impact which is amplified by the elastic element 21.

As shown in Figure 3, the distributor frame 9 has an interface surface 29 which, in use, faces the filtering device 2. The interface surface 29 may, at least in some of the portions thereof, be in contact with the filtering device 2, in particular with the head 101, for transmitting to the filtering device 2 the impact and the vibrations generated by the percussion element 6.

On the interface surface 29 of the distributor frame 9 a recess 30 is made, which extends in the inner region 50 of the distributor frame 9. More specifically, the recess 30 penetrates into the inner region 50 of the distributor frame 9, towards the impact surface 10.

When the cleaning system 1 is coupled to the filtering device 2, the interface surface 29 comes into contact, in a peripheral zone thereof (that is to say, in an outer region 60 which surrounds the inner region 50), with the head 101 of the filtering device 2.

Due to the recess 30, in an operating condition of the cleaning system 1, that is to say, when the cleaning system 1 is coupled to the filtering device 2, the distributor frame 9 is spaced from the head 101 in the inner region 50. The impact of the percussion element 6 against the impact surface 10 of the distributor frame 9 and the vibrations deriving therefrom are very intense in the inner region 50, which is closer to the percussion element 6, and they diffuse gradually passing from the inner region 50 towards the outer region 60 of the distributor frame 9.

The recess 30 acts as a discharge and defines a bridge structure which gradually diffuses the impact of the percussion element 6 and, in the inner region 50, prevents the direct contact between the distributor frame 9 and the head 101. This reduces the risks that, during operation of the cleaning system 1, the distributor frame 9 and the end 14 of the filtering device 2, in particular the head 101, are damaged in the inner region 10, thereby rendering impact and vibrations to be transmitted in the filtering elements 3 progressively ineffective.

In other words, the recess 30 defines between the distributor frame 9 and the head 101, in the inner region 10, an empty space which acts as a distribution volume for effectively distributing the impact and the consequent vibrations in the inner region 10, that is to say, in the portion of the distributor frame 9 which - in the absence of the recess 30 - would be more stressed and could be damaged together with the filtering device 2, in particular with the relative head 101.

The recess 30 may have a different depth at different points of the inner region 50. According to the example shown, the recess 30 has a maximum depth D, which may be substantially constant, immediately below the impact surface 10. The depth of the recess 30 decreases progressively when moving away from the impact surface 10. The depth of the recess 30 becomes zero, that is to say, the recess 30 is absent, in the outer region 60.

The recess 30 does not reduce the effectiveness of the cleaning system 1, since the distributor frame 9, following the action of the percussion element 6, still transmits kinetic energy and vibrations to the filtering device 2, at least in a peripheral zone of the distributor frame 9. Due to the elastic nature of the filter material with which the filtering elements 3 are formed, the kinetic energy and the vibrations propagate throughout the filter material, guaranteeing an effective cleaning of the filtering device 2, that is to say, an effective detachment of the contaminating particles from the filtering surface 5.

The recess 30 gives the intermediate structure 100, which comprises the distributor frame 9 and the head 101, a differentiated capacity of absorbing the kinetic energy which the percussion element 6 transfers to the intermediate structure 100 each time a percussion (that is to say, an impact) is applied to the distributor frame 9. More specifically, the capacity to absorb energy is greater in the inner region 50 of the intermediate structure 100 than in the region of the intermediate structure 100 surrounding the inner region 50. In this way, peak stresses are avoided in the inner region 50 and the energy deriving from the impact is distributed in a more uniform manner also in the outer region 60 of the intermediate structure 100, that is to say, in the region surrounding the inner region 50.

In the example shown in Figure 3, the capacity to absorb the energy deriving from the percussions is maximum in a central part of the inner region 50, wherein the recess 30 has the maximum depth D. The capacity to absorb vibrations decreases moving towards the periphery of the inner region 50, as the depth of the recess 30 is reduced, until reaching a minimum value in the outer region 60.

According to the example shown, some cavities 32 are provided on the interface surface 29 for technological reasons linked to the production of the distributor frame 9. The cavities 32 are not important for the operation of the apparatus according to the invention.

The recess 30 may have different shapes and sizes from those described above, depending on the materials used and the geometries of the distributor frame 9 and of the filtering device 2, in particular of the head 101.

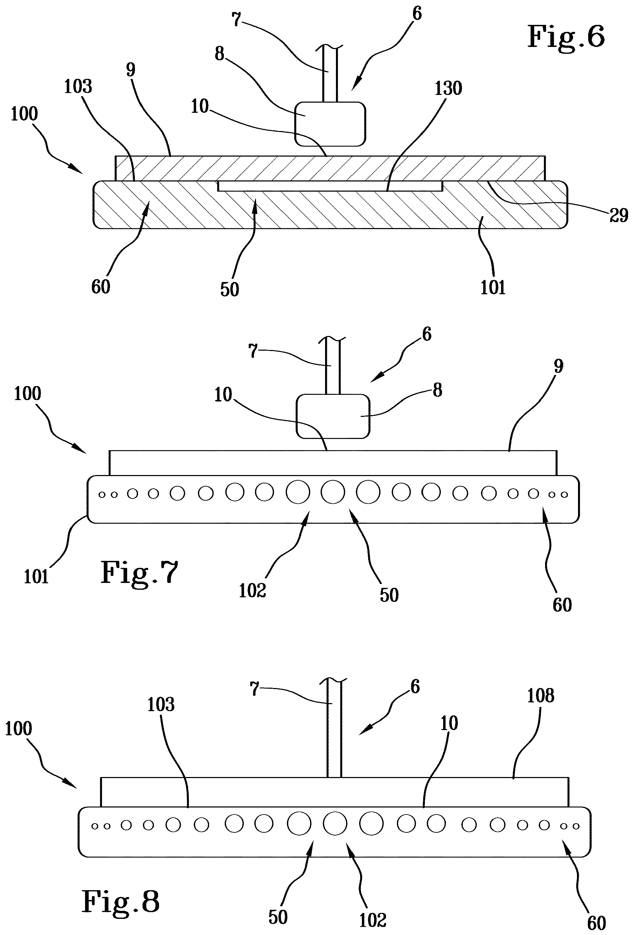

According to an alternative embodiment, shown in Figure 6, the differentiated capacity of absorbing energy of the intermediate structure 100 may be obtained by providing a recess 130 in the head 101, instead of in the distributor frame 9. In this case, the recess 130 is obtained on a face 103 of the head 101, the face 103 facing the distributor frame 9. In this case, the interface surface 29 of the distributor frame 9 may be substantially flat.

The recess 130 prevents direct contact between the distributor frame 9 and the head 101 in the inner region 50, exerting a shock absorbing action against the impacts which the percussion element 6 applies on the intermediate structure 100. Outside the inner region 50, that is to say, in the outer region 60, the distributor frame 9 is, on the other hand, in contact with the head 101. Owing to the recess 130, the intermediate structure 100 has, in the inner region 50 partly delimited by the impact surface 10, a capacity to absorb the energy deriving from the impact which is less than in the outer region 60.

According to a further alternative embodiment, shown in Figure 7, the differentiated capacity of absorbing energy of the intermediate structure 100 may be obtained by acting on the head 101, without using the recess 130. For example, it is possible to provide a distribution of lightening portions 102 in the head 101, which produce a compliance of the head 101 which is greater in the inner region 50 than the outer region 60. For example, the lightening portions 102 may have larger dimensions in the inner region 50 than in the outer region 60, or they may be absent in the outer region 60, so as to guarantee a higher energy absorption in the inner region 50.

It is possible to obtain the same result by suitably selecting the material of the head 101, for example using a material for the head 101 with a differentiated density, the material being less dense in the inner region 50 and more dense in the outer region 60.

More generally speaking, the differentiated capacity of absorbing energy (greater in the inner region 50 than in the outer region 60) of the intermediate structure 100 may be obtained by acting on the geometry and/or on the material of the head 101 and/or of the distributor frame 9, more specifically in a portion of the distributor frame 9 facing towards the head 101.

According to an alternative embodiment, shown in Figure 8, the distributor frame 9 may be omitted. In this case, the percussion element 6 comprises a distributor mass 108 connected to the stem 7, wherein the distributor mass 108 is shaped like a plate which is able to make contact with a relatively large impact surface 10 of the face 103 of the head 101, in such a way as to distribute the energy deriving from the impact on a majority extension of the face 103.

In this case, the intermediate structure 100 comprises only the head 101, the differentiated capacity of which to absorb energy (greater in the inner region 50 than in the outer region 60) can be obtained by intervening on the geometry or on the material of the head 101, as described above with reference to Figure 7.

The cleaning system 1 may comprise a containment element 34 for enclosing the percussion element 6 and the respective drive mechanism inside of the containment element 34. The containment element 34 may, for example, be shaped like a bell.

The containment element 34 is suitable for being fixed to the supporting structure 16.

The containment element 34 has, on an end wall 37 thereof, a plurality of openings 38 through which a flow of clean air coming from the filtering device 2 can reach the outside environment, after passing through the containment element 34. The end wall 37 is positioned on the opposite side of the cleaning system 1 relative to the filtering device 2. The end wall 37 is, in the example illustrated, an upper surface of the containment element 34. The openings 38 may be shaped as wedges distributed about a centre lying, for example, on the longitudinal axis H.

A suction device, not illustrated, is provided to suck the gaseous flow through the openings 38.

An insulator element 39 is also provided for opening or selectively closing the openings 38.

More specifically, the insulator element 39 is movable between a closed position and an open position. In the closed position, the insulator element 39 closes the openings 38 thereby preventing a flow of clean air coming from the filtering device 2 from reaching the outside environment and isolating the suction device from the filtering device 2. In the open position, shown in Figure 2, the insulator element 39 leaves the openings 38 open, thereby putting the filtering device 2 in fluid communication with an outlet duct, not illustrated, through the containment element 34. The outlet duct not illustrated, along which a suction apparatus can be positioned, has the purpose of bringing the clean air to the outside environment.

The insulator element 39 may be shaped as a disc or a wheel, or as a grid. The insulator element 39 has a plurality of occluding portions 40 each of which is intended to close an opening 38. Each occluding portion 40 may be shaped like a circular sector, for example having dimensions slightly greater than the dimensions of the corresponding opening 38.

The insulator element 39 may be mounted inside the containment element 34, for example immediately below the end wall 37, in such a way as to be in contact with the end wall 37.

The insulator element 39 is movable on a plane arranged transversally, in particular perpendicularly, to the movement direction Z, so as to pass from the closed position to the open position or vice versa.

In particular, the insulator element 39 may be rotatable about an axis arranged parallel to the movement direction Z to pass from the closed position to the open position.

In more detail, in the closed position, the occluding portions 40 are positioned at the openings 38, so as to close the openings. In the open position, the insulator element 39 is rotated in such a way that each occluding portion 40 is interposed between two consecutive openings 38, so as to leave the openings 38 free.

According to an embodiment not illustrated, the insulator element could have a plurality of occluding portions positioned in such a way as to define a grid and could be moved by a linear actuator suitable for displacing the grid between an open position and a closed position by moving in a direction substantially perpendicular to the axis Z.

The cleaning system 1 comprises a driving element for moving the insulator element 39 between the open position and the closed position. The driving element may comprise an electric motor, for example a servomotor 41 arranged for rotating the insulator element 39 about a vertical axis.

The driving element which drives the insulator element 39 is independent of the drive device which actuates the percussion element 6.

This makes it possible to optimise the operation of the cleaning system 1 depending on the type of application in which the cleaning system 1 is intended to be used.

For example, the insulator element 39 may be moved to the closed position before activating the percussion element 6.

When the insulator element 39 is moved to the closed position, the filtering device 2 is isolated from the suction device having the function of sucking the clean air in the outlet duct. In this way, the negative pressure generated by the suction device in the outlet duct is eliminated or reduced, which helps the contaminating particles to be detached from the filter material.

Moreover, owing to the insulator element 39 which isolates the filtering device 2, it is possible to facilitate the detachment of the contaminating particles from the filter material owing to a sort of suction action generated by adjacent filtering devices, not shown in the drawings, which continue to operate whilst the filtering device 2 is cleaned.

Moreover, the insulator element 39 may be moved to the open position after a predetermined period of time has passed from the application of the last percussion by the percussion element 6. This allows the dust particles moved with the last percussion to be left with time to deposit in a lower region of the filtering device 2, so as to maximise the effectiveness of the last percussion applied by the percussion element 6.

In this way it is possible to effectively use all the percussions applied to the distributor frame 9 by the percussion element 6 and consequently optimise the number of percussions. In this way, a saving in the energy required for operation of the cleaning system 1 can be obtained.

When the filtering device 2 operates normally, the insulator element 39 is arranged in the open position, in such a way that the flow of clean air, from which the dust has been removed in the filtering device 2, passes from the filtering device 2 in the containment element 34 and from the latter goes into the outlet duct through the openings 38.

In particular, the flow of clean air exits from the openings 38 following a linear path, that is to say, a non-tortuous path, which extends substantially in a direction parallel to the movement direction Z of the percussion element 6. The flow of clean air leaves in a homogeneous manner from all the openings 38, that is to say, there are no substantial differences between one opening 38 and the other with regard to the passage of clean air directed towards the outside environment.

This makes the operation of the cleaning system 1 homogeneous with reference to different zones of the filtering device 2.

In the open position of the insulator element 39, the openings 38 define, in their entirety, a transit section for the flow of clean air coming out of the cleaning system 1. This transit section may have an area substantially equal to the area of a total outlet section through which the flow of clean air exits from the filtering device 2 to the end 14. More specifically, for a predetermined filtering device 2, the sum of the areas of the openings 38 is determined on the basis of the sum of the areas of the passages of the filtering device 2 through which the clean gaseous flow is evacuated, for example the filtering elements 3. It is desirable to have a balance or an equivalence between the two sums of areas.

This makes it possible to limit the pressure drop in the cleaning system 1. The cleaning system 1 and the filtering device 2 may be inserted in a filtering system which comprises a plurality of filtering devices 2, each of which is connected to a respective cleaning system 1.

The filtering system comprises a central control unit configured for controlling and coordinating the operation of all the cleaning systems 1 and of all the filtering devices 2 forming part of the filtering system.

Each cleaning system 1 (and the corresponding filtering device 2) is associated with a slave control device configured to control the percussion element 6 of each cleaning system 1.

During operation of the filtering system, the pressure difference is detected between the pressure of the gaseous flow, in particular of air, to be filtered which enters each filtering device 2 and the pressure of the clean gaseous flow, in particular of air, which comes out of each filtering device 2.

When the central control unit detects that, for a particular filtering device 2, the above-mentioned pressure difference exceeds a predetermined threshold value (which means that the filtering device 2 needs to be cleaned), the central control unit sends a signal to the slave control device associated with the filtering device 2 to be cleaned. A cleaning cycle is thus activated for the filtering device 2 at issue, which is controlled by the slave device associated with that filtering device 2. In particular, the slave device generates two signals. A first signal is a closure signal directed to the servomotor 41, so as to activate the servomotor 41 so that the latter moves the insulator element 39 to the closed position. This signal is absent if there is no insulator element 39.

A second signal is a percussion start signal directed to the motor 23, so as to activate the motor 23, which moves the percussion element 6 along the movement direction Z away from the head 101.

At the end of the cleaning cycle, the insulator element 39 is again rotated to be returned to the open position. This occurs owing to the intervention of the slave device associated with the filtering device 2. The slave device also blocks the rotation of the motor 23, so as to stop the movement of the percussion element 6.

The slave device associated with the filtering device 2 just cleaned also signals to the central control unit that the cleaning cycle for cleaning the filtering device 2 is finished and that a new cleaning cycle for cleaning another filtering device 2 can be started. It is also possible to start cleaning cycles in a different order, in a manner controlled by the central control unit. Several filtering devices might also be cleaned simultaneously.

The instants in which the insulator element 39 is moved to the closed and open position, respectively, the instants in which the percussion element 6 starts to generate percussion and, respectively, terminates the generation of percussion, the number of percussions applied by the percussion element 6 for each cleaning cycle and the time between two successive percussions can be freely selected as a function of the type of application to which the filtering device 2 is dedicated.

This makes the cleaning system 1 very versatile and able to adapt to different applications of the filtering device 2.

The insulator element 39 is an optional component of the cleaning system 1. According to an alternative embodiment not illustrated, the insulator element 39 may be absent, as well as the suction device. In this case, the filtering device remains in fluid communication with the outside environment both when the cleaning system 1 is inactive and when the cleaning system 1 is active.

For example, the insulator element 39 may be superfluous if the fluid processed by the filtering device 2 is a fluid containing dry and heavy dust, which following the percussions applied by the percussion element 6 detach from the filtering surface 5 even if in the filtering device 2 there is a flow of air directed towards the cleaning system 1.

The operating modes of the filtering device 2 also influence the need to use the insulator element 39. If the cleaning system 1 cleans the filtering device 2 whilst the latter is inactive, the insulator element 39 may be omitted.

According to an embodiment not illustrated, the insulator element 39 may have a shape and operating mode different from that shown in Figures 1 to 5. For example, the insulator element could comprise one or more grilles slidable in a plane arranged transversally, for example perpendicularly, to the movement direction Z.

In the example shown, a filtering device 2 having a square transversal cross section has always been shown, taken on a plane perpendicular to the movement direction Z. The filtering device 2 may alternatively have a transversal cross-section different from that illustrated, for example rectangular, polygonal, circular or other. The shape of the distributor frame 9 will therefore be modified to adapt it to the shape of the transversal cross section of the filtering device 2.

Moreover, the distributor frame 9 may have shapes different from that shown in the drawings or even be absent.

The cleaning system 1 may be associated with one or other end of the filtering device 2, so as to operate at the outlet end of the clean gaseous fluid or alternatively at the inlet end of the dusty gaseous fluid. It is also possible to position the cleaning system 1 along an outer side surface of the filtering device 2, depending on the path of the gaseous fluid. According to an alternative embodiment not illustrated, the impact surface 10 of the intermediate structure 100 on which the percussion element 6 applies the percussions could be arranged in a peripheral position of the intermediate structure 100 instead of being arranged in the central position shown in the drawings.

The terms "inner region 50" and "outer region 60" are therefore to be understood in a relative sense, that is to say, they simply indicate that the outer region 60 is in a position more external than the inner region 50, without, however, implying that the inner region 50 is positioned exactly at the centre of the intermediate structure 100.

Moreover, the transversal dimensions of the inner region 50, in a plane positioned perpendicularly to the axis H, may be greater than the corresponding dimensions of the contact surface 10. In general, the inner region 50 has transversal dimensions which depend not only on the dimensions of the percussion element 6, but also on the dimensions of the portion of the intermediate structure 100 on which the most significant part of the stresses, deriving from the impact of the percussion element 6 on the impact surface 10, is discharged.

According to another alternative embodiment, instead of a single percussion element 6 it is possible to have a plurality of percussion elements which apply respective percussions on distinct impact surfaces of the intermediate structure 100. In this case, the different capacity to absorb the energy deriving from the impact is provided in inner regions adjacent to each impact surface.

## Claims

1. An apparatus comprising a filtering device (2) which includes a plurality of filtering elements (3) made of a filter material, the apparatus further comprising a cleaning system (1) for periodically cleaning the filtering device (2) in order to remove contaminating particles from the filtering device (2), the cleaning system (1) having at least one percussion element (6) for applying percussions at least on an impact surface (10) of an intermediate structure (100), so as to generate, for each percussion, an impact which is able to detach from the filter material a first fraction of the contaminating particles adhering to it and then vibrate the filter material to detach from it further contaminating particles, the intermediate structure (100) being interposed between the percussion element (6) and the filter material, the intermediate structure (100) having an inner region (50) delimited at least partly by the impact surface (10) and an outer region (60) which surrounds at least partly the inner region (50), wherein the intermediate structure (100) has a capacity to absorb energy deriving from the percussions which is greater in the inner region (50) than in the outer region (60).

2. The apparatus according to claim 1, wherein the intermediate structure (100) has a greater flexibility in the inner region (50) than in the outer region (60), or wherein the intermediate structure (100) has, in the inner region (50), a geometry different from the outer region (60), so that the capacity to absorb energy in the inner region (50) is greater than in the outer region (60).

3. The apparatus according to any preceding claim, wherein the intermediate structure (100) comprises a head (101) which supports the filtering elements (3) and a distributor frame (9) facing the percussion element (6) for receiving the percussions and distributing on the head (101) the energy deriving from the percussions.

4. The apparatus according to claim 4, wherein the distributor frame (9) and the head (101) are spaced apart from each other in the inner region (50) and are in contact with each other in the outer region (60), and optionally wherein, in the inner region (50), the distributor frame has a recess (30) facing the head (101), and/or the head (101) has a recess (130) facing the distributor frame (9).

5. The apparatus according to claim 3 or 4, wherein the distributor frame (9) comprises a plurality of ribs (11), which extend in respective radial directions from the impact surface (10), a connecting structure (12) which joins respective ends of the ribs (11) furthest away from the impact surface (10) and a further connecting structure (13), which joins respective intermediate regions of the ribs (11).

6. The apparatus according to claim 1 or 2, wherein the intermediate structure (100) comprises a head (101) which supports the filtering elements (3), the percussion element (6) having a distributor mass (108) for applying the percussions directly on the head (101).

7. The apparatus according to any one of claims 3 to 6, wherein the head (101) is made of a material with a variable density, having a density greater in the inner region (50) than in the outer region (60), or wherein the head (101) has a distribution of lightening portions to make the capacity of absorbing the energy deriving from the percussions greater in the inner region (50) than in the outer region (60).

8. The apparatus according to any preceding claim, and further comprising a supporting structure (16) which can be positioned above the intermediate structure (100) for supporting the percussion element (6), the supporting structure (16) comprising a supporting portion (19) inside of which the percussion element (6) is slidable, an elastic element (21) being interposed between the supporting portion (19) and the percussion element (6) for pushing the percussion element (6) towards the intermediate structure (100).

9. The apparatus according to any preceding claim, and further comprising an insulator element (39) movable between an open position, in which the insulator element (39) lets pass a gaseous flow coming from the filtering device (2), and a closed position, in which the insulator element (39) blocks the gaseous flow.

10. The apparatus according to claim 9, wherein the insulator element (39) is movable between the open position and the closed position by moving in a plane arranged perpendicularly to a longitudinal axis (H) of the filtering device (2).

11. The apparatus according to claim 10, wherein the insulator element (39) is movable between the open position and the closed position by a rotational movement about an axis of rotation parallel to the longitudinal axis (H).

12. The apparatus according to any one of claims 9 to 11, wherein, in the open position, the insulator element (39) is configured to allow the gaseous flow coming from the filtering device (2) to escape from the insulator element (39) along an outlet direction (H) substantially parallel to a longitudinal axis of the filtering device (2), or wherein the insulator element (39) is movable between the open position and the closed position independently of the percussion element (6).

13. The apparatus according to any preceding claim, and further comprising a containment element (34) which houses the percussion element (9), the containment element (34) being optionally mounted in a removable manner so as to be removable from the apparatus.

14. The apparatus according to claim 13, wherein the containment element (34) comprises an end wall (37) having a plurality of openings (38) each of which is shaped like a wedge, the openings (38) being distributed around a central zone of the end wall (37).

15. The apparatus according to claim 14, as claim 13 is appended to any one of claims 9 to 12, wherein the insulator element (39) comprises a disc having a plurality of occluding portions (40) shaped like circular sectors for closing the openings (40), an empty space being interposed between two occluding portions (40).

## Patentansprüche

1. Vorrichtung, umfassend eine Filtervorrichtung (2) die eine Vielzahl von Filterelementen (3) beinhaltet, die aus einem Filtermaterial hergestellt sind, wobei die Vorrichtung ferner ein Reinigungssystem (1) zur regelmäßig wiederkehrenden Reinigung der Filtervorrichtung (2) umfasst, um kontaminierende Partikel aus der Filtervorrichtung (2) zu entfernen, wobei das Reinigungssystem (1) zumindest ein Schlagelement (6) aufweist, um Schläge zumindest auf eine Aufprallfläche (10) einer Zwischenstruktur (100) auszuüben, so dass, für jeden Schlag, eine Aufprallwirkung erzeugt wird, die geeignet ist, von dem Filtermaterial eine erste Fraktion der kontaminierenden Partikel abzulösen, die daran anhaftet, und anschließend das Filtermaterial in Vibration zu versetzen, um weitere kontaminierende Partikel davon abzulösen, wobei die Zwischenstruktur (100) zwischen dem Schlagelement (6) und dem Filtermaterial angeordnet ist, und die Zwischenstruktur (100) einen inneren Bereich (50) aufweist, der zumindest teilweise durch die Aufprallfläche (10) begrenzt ist, und einen äußeren Bereich (60) aufweist, der zumindest teilweise den inneren Bereich (50) umgibt, wobei die Zwischenstruktur (100) eine Fähigkeit zur Aufnahme der von den Schlägen herrührenden Energie aufweist, die in dem inneren Bereich (50) größer ist als in dem äußeren Bereich (60).

2. Vorrichtung nach Anspruch 1, wobei die Zwischenstruktur (100) in dem inneren Bereich (50) eine größere Flexibilität aufweist als in dem äußeren Bereich (60), oder wobei die Zwischenstruktur (100), in dem inneren Bereich (50), eine Geometrie aufweist, die von der des äußeren Bereichs (60) verschieden ist, so dass die Fähigkeit zur Aufnahme von Energie in dem inneren Bereich (50) größer ist als in dem äußeren Bereich (60).

3. Vorrichtung nach einem beliebigen der vorhergehenden Ansprüche, wobei die Zwischenstruktur (100) einen Kopf (101) umfasst, der die Filterelemente (3) trägt, und einen Verteilerrahmen (9) umfasst, der dem Schlagelement (6) zugewandt ist, um die Schläge aufzunehmen und die von den Schlägen herrührende Energie auf dem Kopf (101) zu verteilen.

4. Vorrichtung nach Anspruch 4, wobei der Verteilerrahmen (9) und der Kopf (101) in dem inneren Bereich (50) voneinander beabstandet sind und in dem äußeren Bereich (60) miteinander in Berührung stehen, und wobei optional, in dem inneren Bereich (50), der Verteilerrahmen eine Aussparung (30) aufweist, die dem Kopf (101) zugewandt ist, und/oder der Kopf (101) eine Aussparung (130) aufweist, die dem Verteilerrahmen (9) zugewandt ist.

5. Vorrichtung nach Anspruch 3 oder 4, wobei der Verteilerrahmen (9) eine Vielzahl von Rippen (11) umfasst, die sich in entsprechenden radialen Richtungen von der Aufprallfläche (10) ausgehend erstrecken, und eine Verbindungsstruktur (12) umfasst, die entsprechende Enden der Rippen (11), die am weitesten von der Aufprallfläche (10) entfernt liegen, miteinander verbindet, und eine weitere Verbindungsstruktur (13) umfasst, die entsprechende zwischenliegende Bereiche der Rippen (11) miteinander verbindet.

6. Vorrichtung nach Anspruch 1 oder 2, wobei die Zwischenstruktur (100) einen Kopf (101) umfasst, der die Filterelemente (3) trägt, wobei das Schlagelement (6) eine Verteilermasse (108) aufweist, um die Schläge direkt auf den Kopf (101) anzuwenden.

7. Vorrichtung nach einem beliebigen der Ansprüche von 3 bis 6, wobei der Kopf (101) aus einem Material mit variabler Dichte hergestellt ist, das eine Dichte aufweist, die in dem inneren Bereich (50) größer ist als in dem äußeren Bereich (60), oder wobei der Kopf (101) eine Verteilung von Erleichterungsabschnitten aufweist, um zu bewirken, dass die Fähigkeit zur Aufnahme der von den Schlägen herrührenden Energie in dem inneren Bereich (50) größer ist als in dem äußeren Bereich (60).

8. Vorrichtung nach einem beliebigen der vorhergehenden Ansprüche, und ferner umfassend eine Trägerstruktur (16), die über der Zwischenstruktur (100) angeordnet werden kann, um das Schlagelement (6) zu tragen, wobei die Trägerstruktur (16) einen Trägerabschnitt (19) umfasst, innerhalb dessen das Schlagelement (6) gleiten kann, wobei ein elastisches Element (21) zwischen dem Trägerabschnitt (19) und dem Schlagelement (6) angeordnet ist, um das Schlagelement (6) zur Zwischenstruktur (100) hin zu schieben.

9. Vorrichtung nach einem beliebigen der vorhergehenden Ansprüche, und ferner umfassend ein Isolierelement (39), das beweglich ist zwischen einer geöffneten Stellung, in der das Isolierelement (39) eine von der Filtervorrichtung (2) kommende gasförmige Strömung durchfließen lässt, und einer geschlossenen Stellung, in der das Isolierelement (39) die gasförmige Strömung blockiert.

10. Vorrichtung nach Anspruch 9, wobei das Isolierelement (39) beweglich ist zwischen der geöffneten Stellung und der geschlossenen Stellung, indem es sich auf einer Ebene bewegt, die orthogonal zu einer Längsachse (H) der Filtervorrichtung (2) ist.

11. Vorrichtung nach Anspruch 10, wobei das Isolierelement (39) beweglich ist zwischen der geöffneten Stellung und der geschlossenen Stellung, indem es eine Drehbewegung um eine Drehachse ausführt, die parallel zu der Längsachse (H) ist.

12. Vorrichtung nach einem beliebigen der Ansprüche von 9 bis 11, wobei, in der geöffneten Stellung, das Isolierelement (39) so konfiguriert ist, dass es der von der Filtervorrichtung (2) kommenden gasförmigen Strömung ermöglicht, aus dem Isolierelement (39) entlang einer Auslassrichtung (H) auszutreten, die im Wesentlichen parallel zu einer Längsachse der Filtervorrichtung (2) ist, oder wobei das Isolierelement (39) unabhängig von dem Schlagelement (6) zwischen der geöffneten Stellung und der geschlossenen Stellung beweglich ist.

13. Vorrichtung nach einem beliebigen der vorhergehenden Ansprüche, und ferner umfassend ein Aufnahmeelement (34), in dem das Schlagelement (9) untergebracht ist, wobei das Aufnahmeelement (34) optional in abnehmbarer Weise montiert ist, so dass es von der Vorrichtung abgenommen werden kann.

14. Vorrichtung nach Anspruch 13, wobei das Aufnahmeelement (34) eine Abschlusswand (37) umfasst, die eine Vielzahl von Öffnungen (38) aufweist, von denen jede keilförmig gestaltet ist, wobei die Öffnungen (38) um eine mittlere Zone der Abschlusswand (37) verteilt sind.

15. Vorrichtung nach Anspruch 14, sofern Anspruch 13 von einem beliebigen der Ansprüche von 9 bis 12 abhängig ist, wobei das Isolierelement (39) eine Scheibe umfasst, die eine Vielzahl von Verschlussabschnitten (40) aufweist, die wie Kreissektoren geformt sind, um die Öffnungen (40) zu verschließen, wobei zwischen zwei Verschlussabschnitten (40) ein Leerraum angeordnet ist.

## Revendications

1. Un appareil comprenant un dispositif de filtration (2) qui inclut une pluralité d'éléments filtrants (3) réalisés avec un matériau filtrant, l'appareil comprenant en outre un système de nettoyage (1) pour nettoyer périodiquement le dispositif de filtration (2) afin d'éliminer des particules contaminantes du dispositif de filtration (2), le système de nettoyage (1) ayant au moins un élément percuteur (6) pour appliquer des percussions au moins sur une surface d'impact (10) d'une structure intermédiaire (100), de manière à générer, pour chaque percussion, un impact qui est à même de détacher du matériau filtrant une première fraction des particules contaminantes qui y adhèrent puis de faire vibrer le matériau filtrant pour en détacher d'autres particules contaminantes, la structure intermédiaire (100) étant interposée entre l'élément percuteur (6) et le matériau filtrant, la structure intermédiaire (100) ayant une région intérieure (50) délimitée au moins partiellement par la surface d'impact (10) et une région extérieure (60) qui entoure au moins partiellement la région intérieure (50), dans lequel la structure intermédiaire (100) a une capacité à absorber l'énergie dérivant des percussions qui est plus élevée dans la région intérieure (50) que dans la région extérieure (60).

2. L'appareil selon la revendication 1, dans lequel la structure intermédiaire (100) a une plus grande flexibilité dans la région intérieure (50) que dans la région extérieure (60), ou dans lequel la structure intermédiaire (100) présente, dans la région intérieure (50), une géométrie différente de la région extérieure (60), de sorte que la capacité à absorber l'énergie dans la région intérieure (50) est plus élevée que dans la région extérieure (60).

3. L'appareil selon l'une quelconque des revendications précédentes, dans lequel la structure intermédiaire (100) comprend une tête (101) qui supporte les éléments filtrants (3) et un châssis distributeur (9) face à l'élément percuteur (6) pour recevoir les percussions et distribuer sur la tête (101) l'énergie dérivant des percussions.

4. L'appareil selon la revendication 4, dans lequel le châssis distributeur (9) et la tête (101) sont espacés l'un de l'autre dans la région intérieure (50) et sont en contact l'un avec l'autre dans la région extérieure (60), et optionnellement dans lequel, dans la région intérieure (50), le châssis distributeur a un renfoncement (30) faisant face à la tête (101), et/ou la tête (101) a un renfoncement (130) faisant face au châssis distributeur (9).

5. L'appareil selon la revendication 3 ou 4, dans lequel le châssis distributeur (9) comprend une pluralité de nervures (11), qui s'étendent dans des directions radiales respectives à partir de la surface d'impact (10), une structure de raccordement (12) qui relie des extrémités respectives des nervures (11) les plus éloignées de la surface d'impact (10) et une autre surface de raccordement (13), qui relie des régions intermédiaires respectives des nervures (11).

6. L'appareil selon la revendication 1 ou 2, dans lequel la structure intermédiaire (100) comprend une tête (101) qui supporte les éléments filtrants (3), l'élément percuteur (6) ayant une masse de distribution (108) pour appliquer les percussions directement sur la tête (101).

7. L'appareil selon l'une quelconque des revendications de 3 à 6, dans lequel la tête (101) est réalisée dans un matériau à densité variable, ayant une plus grande densité dans la région intérieure (50) que dans la région extérieure (60), ou dans lequel la tête (101) a une distribution de portions d'allègement pour rendre la capacité à absorber l'énergie dérivant des percussions plus grande dans la région intérieure (50) que dans la région extérieure (60).

8. L'appareil selon l'une quelconque des revendications précédentes, et comprenant en outre une structure de support (16) qui peut être positionnée au-dessus de la structure intermédiaire (100) pour supporter l'élément percuteur (6), la structure de support (16) comprenant une portion de support (19) à l'intérieur de laquelle l'élément percuteur (6) peut coulisser, un élément élastique (21) étant interposé entre la portion de support (19) et l'élément percuteur (6) pour pousser l'élément percuteur (6) vers la structure intermédiaire (100).

9. L'appareil selon l'une quelconque des revendications précédentes, et comprenant en outre un élément isolateur (39) mobile entre une position ouverte, dans laquelle l'élément isolateur (39) laisse passer un flux gazeux provenant du dispositif de filtration (2), et une position fermée, dans laquelle l'élément isolateur (39) bloque le flux gazeux.

10. L'appareil selon la revendication 9, dans lequel l'élément isolateur (39) est mobile entre la position ouverte et la position fermée en se déplaçant dans un plan disposé perpendiculairement à un axe longitudinal (H) du dispositif de filtration (2).

11. L'appareil selon la revendication 10, dans lequel l'élément isolateur (39) est mobile entre la position ouverte et la position fermée selon un mouvement de rotation autour d'un axe de rotation parallèle à l'axe longitudinal (H).

12. L'appareil selon l'une quelconque des revendications de 9 à 11, dans lequel, dans la position ouverte, l'élément isolateur (39) est configuré pour permettre au flux gazeux provenant du dispositif de filtration (2) de s'échapper de l'élément isolateur (39) le long d'une direction de sortie (H) essentiellement parallèle à un axe longitudinal du dispositif de filtration (2), ou dans lequel l'élément isolateur (39) est mobile entre la position ouverte et la position fermée indépendamment de l'élément percuteur (6).

13. L'appareil selon l'une quelconque des revendications précédentes, et comprenant en outre un élément de confinement (34) qui loge l'élément percuteur (9), l'élément de confinement (34) étant optionnellement monté de manière amovible afin de pouvoir être retiré de l'appareil.

14. L'appareil selon la revendication 13, dans lequel l'élément de confinement (34) comprend une paroi d'extrémité (37) ayant une pluralité d'ouvertures (38) dont chacune est conformée comme un coin, les ouvertures (38) étant distribuées autour d'une zone centrale de la paroi d'extrémité (37).

15. L'appareil selon la revendication 14, lorsque la revendication 13 dépend de l'une quelconque des revendications de 9 à 12, dans lequel l'élément isolateur (39) comprend un disque ayant une pluralité de portions d'occlusion (40) conformées comme des secteurs circulaires pour fermer les ouvertures (40), un espace vide étant interposé entre deux portions d'occlusion (40).
